# FASCICULE DE BREVET EUROPEEN

(11) **EP 0 926 001 B1**
(45) Date de publication et mention de la délivrance du brevet: **07.06.2006**
(21) Numéro de dépôt: 98403150.0
(22) Date de dépôt: 14.12.1998
(51) Int. Cl.: B60P 7/08

(54) **Dispositif de limitation du déplacement d'un chargement**
Vorrichtung zur Bewegungseinschränkung von Lasten
Device for limiting the displacement of a load

(30) Priorité: 15.12.1997 FR 9715872
(43) Date de publication de la demande: 30.06.1999
(73) Titulaire: SOCIETE NATIONALE DES CHEMINS DE FER FRANCAIS, F-75009 Paris (FR)
(72) Inventeur: Cors, Gille, 78800 Houilles (FR)
(74) Mandataire: Casalonga, Axel

(56) Documents cités:
- EP-A- 0 712 771
- WO-A-81/00392
- DE-A- 2 212 646
- DE-A- 3 537 863
- GB-A- 2 271 985
- US-A- 4 234 278
- US-A- 5 618 138

## Description

La présente invention concerne le domaine de la limitation du déplacement horizontal d'objets reposant sur un support. L'invention s'applique notamment aux chargements reposant sur la plate-forme d'un wagon de chemin de fer.

En effet, pendant un transport par voie ferrée, le chargement est susceptible de subir des déplacements qui peuvent entraîner une mauvaise répartition du chargement d'un wagon, par exemple une mauvaise répartition latérale ayant pour effet de déporter le centre de gravité du wagon chargé, d'une façon excessive par rapport à l'axe géométrique du wagon qui est dans l'alignement, pour un chargement équilibré, avec le centre de gravité. Cette mauvaise répartition du chargement du wagon est susceptible de présenter des risques pour la sécurité du transport.

De façon connue, on peut arrimer le chargement d'un wagon manuellement. Toutefois, un tel arrimage est très onéreux et peut présenter un danger pour le personnel lorsque le chargement est constitué de matériaux à haute température telles que des rouleaux de tôle à leur sortie d'usine avant leur refroidissement complet.

On connaît également par le brevet français n° 94 13650 (SNCF) un dispositif automatique de maintien de rouleaux de tôle à axe horizontal, comprenant un berceau en forme de V équipé de doigts de maintien articulés et pourvus de ressorts capables de maintenir un rouleau de tôle selon un premier axe horizontal grâce à la forme en V du berceau et selon un second axe horizontal perpendiculaire au premier axe grâce aux doigts de maintien. Un tel dispositif donne satisfaction pour des rouleaux de tôle à axe horizontal mais est inapplicable au transport de rouleaux de tôle à axe vertical, ou d'objets dont la zone en contact avec la plate-forme du wagon est sensiblement plane.

DE 35 37 863 A divulgue un dispositif de limitation d'un objet selon le préambule de la revendication 1.

La présente invention a pour objet de remédier aux inconvénients des systèmes précités et de proposer un dispositif de limitation du déplacement horizontal d'objet reposant sur un support prévu pour des objets à fond plat reposant sur un support plat.

Le dispositif de limitation du déplacement horizontal d'un objet reposant sur un support plat, selon l'invention, est du type prévu pour un objet comprenant une paroi inférieure en contact avec le support et un bord adjacent et sensiblement perpendiculaire à la paroi inférieure. Le dispositif de limitation comprend des moyens de retenue de l'objet disposés dans le support, capables de s'effacer sous l'objet et de faire saillie du support vers le haut en formant une butée de déplacement horizontal de l'objet.

Les moyens de retenue comprennent une pluralité de taquets mobiles entre une position de blocage en saillie par rapport au support et une position effacée dans le support et pourvus chacun d'une surface supérieure prévue pour entrer en contact avec un objet posé sur le support et provoquer l'effacement du taquet correspondant, la dépose d'un objet sur le support provoquant l'effacement du taquet correspondant, les taquets étant pourvus de moyens de maintien en position de blocage en l'absence de contact avec un objet, les taquets adjacents aux taquets effacés formant des butées du déplacement horizontal de l'objet.

On peut ainsi charger l'objet sur le support sans intervention préalable sur ledit support, les moyens de retenue qui se trouvent sous l'objet s'effaçant dans le support tandis que les moyens de retenue adjacents restent en saillie et forment ainsi des butées empêchant un déplacement horizontal excessif de l'objet.

Dans un mode de réalisation de l'invention, chaque taquet comprend au moins une surface latérale servant de butée de déplacement horizontal de l'objet, le taquet étant en saillie. Cette surface latérale peut être verticale. Chaque taquet peut comprendre trois surfaces latérales de butée.

Avantageusement, chaque taquet est articulé sur un axe solidaire du support et comprend une première butée de basculement vers le haut.

Dans un mode de réalisation de l'invention, chaque taquet comprend un moyen pour le maintenir en saillie en l'absence d'objet posé sur ledit taquet, par exemple un contrepoids. Un flasque peut être prévu sur lequel sont disposés une pluralité de taquets. On peut ainsi équiper un support existant en rapportant, par exemple par soudure, des flasques, et ce, de façon économique.

La présente invention a également pour objet un support équipé d'une pluralité de dispositifs précités disposés en au moins une rangée. Les dispositifs peuvent être disposés en deux rangées parallèles à une distance l'une de l'autre telle qu'au moins un taquet de chaque dispositif soit en position de blocage. Un wagon ferroviaire peut être équipé d'un tel support. Bien entendu, l'invention peut également s'appliquer dans le domaine routier pour une plate-forme de camion, dans le domaine maritime pour le maintien d'un chargement dans un navire et dans le domaine aéronautique pour le maintien d'un chargement dans un avion.

On peut ainsi disposer un objet sur une plate-forme de transport en supprimant les opérations manuelles d'arrimage dudit objet. L'invention peut par exemple s'appliquer au transport de caisses de tailles diverses et au transport de rouleaux de tôle d'axe vertical, notamment lorsque ces rouleaux de tôle sont incomplètement refroidis et conservent encore une température d'environ 350°C.

La présente invention sera mieux comprise à l'étude de la description détaillée d'un mode de réalisation particulier pris à titre d'exemple nullement limitatif et illustré par les dessins annexés sur lesquels :
la figure 1 est une vue en perspective d'une plate-forme de wagon équipée de dispositifs de limitation du déplacement d'un objet selon l'invention ; et
la figure 2 est une vue de détail en perspective d'un flasque supportant une pluralité de dispositifs conformes à l'invention.

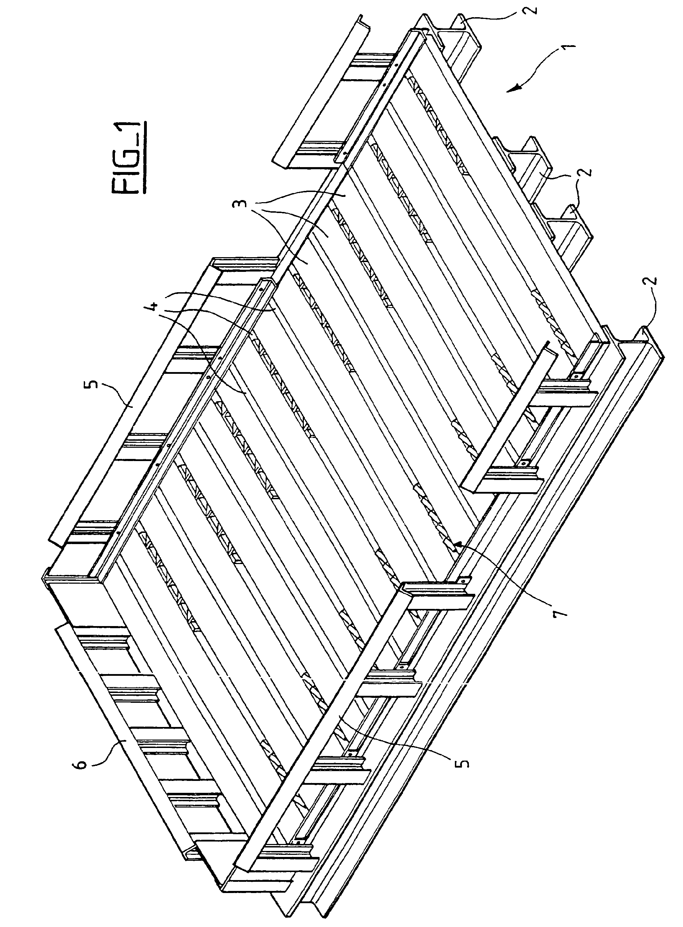

Comme on peut le voir sur la figure 1, la plate-forme 1 de wagon est pourvue de quatre longerons 2 sur lesquels repose un pluralité de traverses 3 séparées par des intervalles 4. La plate-forme 1, de forme rectangulaire, comprend également des bords latéraux 5 et d'extrémité 6.

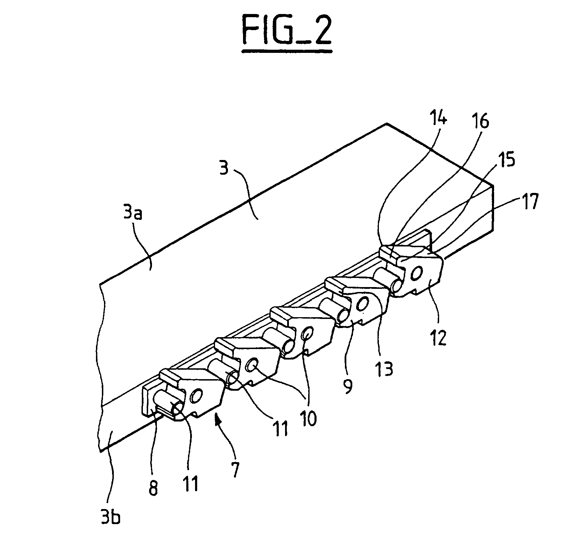

Comme on le voit plus particulièrement sur la figure 2, une traverse 3, de section rectangulaire, comprend une face supérieure horizontale de support 3a et une face latérale verticale 3b sur laquelle est fixé, par exemple par soudure, un module 7 de limitation du déplacement d'un chargement disposé sur la plate-forme 1.

Le module 7 comprend un flasque 8 rapporté sur la face verticale 3b. Le flasque 8 supporte cinq taquets 9 par l'intermédiaire de doigts 10 formant un axe de basculement des taquets 9. Le flasque 8 supporte également cinq doigts de butée 11 prévus pour coopérer avec les taquets 9. Chaque taquet 9 est percé d'un trou pour le montage sur un doigt 10 et est articulé sur ledit doigt 10.

Le taquet 9 comprend une surface de butée de basculement qui est cachée par et en contact avec le doigt de butée 11 sur la figure 2 et qui limite le mouvement de pivotement du taquet 9 vers le haut et définit ainsi sa position en saillie vers le haut.

A l'opposé des surfaces de butée, le taquet 9 comprend un contrepoids 12 qui, sous l'effet de la gravité, tend à pivoter le taquet 9 vers le haut, dans la position illustrée sur la figure 2, le doigt de butée 11 étant en contact avec la butée de basculement vers le haut.

Le taquet 9 est pourvu d'une surface supérieure 13 sensiblement horizontale, dans la position en saillie illustrée sur la figure 2, et prévue pour être en contact avec un objet disposé sur la traverse 3 et provoquant l'effacement dudit taquet 9. Le taquet 9 est également pourvu de surfaces latérales verticales 14 et 15 parallèles, la surface 14 étant disposée du côté du flasque 8 et la surface 15 étant disposée à l'opposé du flasque 8, lesdites surfaces verticales 14 et 15 étant prévues pour former une butée lors du déplacement horizontal dans le sens longitudinal de la plate-forme 1 lors du déplacement d'un objet disposé sur ladite plate-forme 1, et provoquer ainsi la limitation du déplacement de cet objet.

Une surface verticale d'extrémité 16 du taquet 9 est adjacente aux surfaces latérales 14 et 15, à la surface supérieure 13 et à la deuxième surface de butée de basculement vers le bas, la surface verticale 16 étant capable de former une butée empêchant un déplacement horizontal transversal d'un objet reposant sur la plate-forme 1.

Le flasque 9 comprend encore une surface supérieure oblique 17 adjacente aux surfaces latérales verticales 14 et 15 et à la surface supérieure horizontale 13 et s'étendant jusqu'au contrepoids 12. A titre de variante, on pourrait modifier la surface oblique 17 en la munissant d'un redan vertical à proximité de la surface supérieure horizontale 13 pour former une quatrième surface de butée empêchant un déplacement horizontal transversal d'un objet dans le sens opposé au mouvement interdit par la surface verticale 16.

En revenant sur la figure 1, on voit que la plate-forme 1 est pourvue d'une pluralité de modules 7 disposés dans les intervalles 4 entre les traverses 3. La répartition et le nombre de modules 7 sur la plate-forme 1 dépend de la dimension des objets que l'on veut y déposer et du déplacement horizontal longitudinal maximal toléré d'un objet sur la plate-forme 1. L'espacement entre les taquets 9 d'un module 7 dépend également du déplacement horizontal transversal maximal toléré de l'objet.

Ici, un intervalle 4 sur deux est dépourvu de module de limitation de déplacement horizontal d'un objet tandis qu'un autre intervalle 4 est pourvu de deux modules 7 disposés chacun à proximité des extrémités d'une traverse 3 et se faisant face mutuellement, leurs surfaces verticales 16 étant disposées en regard les unes des autres. Ainsi, lorsque l'on pose un objet de largeur sensiblement comprise entre la moitié et la totalité de la largeur de la plate-forme et de longueur supérieure à l'intervalle longitudinal séparant deux modules 7, ledit objet vient appuyer sur les surfaces supérieures horizontales 13 d'un certain nombre de taquets 9 et provoque leur effacement, jusqu'à son contact avec les faces supérieures 3a des traverses 3 de la plate-forme 1.

Les taquets 9 adjacents audit objet restent en saillie, comme illustré sur la figure 2, et empêchent un déplacement horizontal excessif de l'objet en le bloquant dans le sens transversal grâce à leurs surfaces verticales 16 et dans le sens longitudinal grâce à leurs surfaces latérales 14 et 15. Il en va de même lorsque l'on dispose sur la plate-forme 1 un objet dont le fond est circulaire comme un rouleau de tôle à axe vertical, les taquets en saillie adjacents aux taquets effacés par la dépose du rouleau bloquant le déplacement horizontal de ce dernier. Pour coopérer de façon satisfaisante, le bord de l'objet adjacent à sa paroi inférieure reposant sur les traverses 3 doit être sensiblement perpendiculaire à la paroi inférieure sur une hauteur au moins égale à celle de la saillie formée par les taquets. Le bord vertical peut alors être convenablement bloqué par les surfaces verticales de butée des taquets restés en saillie. Bien entendu, on pourrait prévoir de munir chaque intervalle 4 d'un module 7, de munir chaque module 7 d'un nombre différent, supérieur ou inférieur de taquets 9, selon le type de chargement de la plate-forme 1.

Grâce à l'invention, un objet chargé de façon centrée sur la plate-forme 1 est maintenu en place lors du transport, grâce aux taquets qui assurent le blocage lors d'éventuels mouvements horizontaux intempestifs. Ce dispositif est particulièrement adapté aux chargements d'objets pouvant présenter un danger pour le personnel amené à évoluer à proximité, notamment des rouleaux de tôles à axe vertical à température élevée.

## Revendications

1. Dispositif de limitation du déplacement horizontal d'un objet reposant sur un support plat, ledit objet comprenant une paroi inférieure en contact avec le support et un bord adjacent et sensiblement perpendiculaire à la paroi inférieure, le dispositif comprenant des moyens de retenue dudit objet disposés dans le support, capables de s'effacer sous l'objet et de faire saillie du support vers le haut en formant une butée de déplacement horizontal de l'objet, lesdits moyens de retenue comprenant une pluralité de taquets (9) mobiles entre une position de blocage en saillie par rapport au support et une position effacée dans le support et pourvus chacun d'une surface supérieure (13) prévue pour entrer en contact avec un objet posé sur le support et provoquer l'effacement du taquet correspondant, la dépose d'un objet sur le support provoquant l'effacement du taquet correspondant, les taquets étant pourvus de moyens de maintien en position de blocage en l'absence de contact avec un objet, les taquets adjacents aux taquets effacés formant des butées de déplacement horizontal de l'objet, chaque taquet étant articulé sur un axe (10) solidaire du support **caractérisé par le fait que** chaque taquet comprend un contrepoids, tendant à faire pivoter ledit taquet vers le haut.

2. Dispositif selon la revendication 1, **caractérisé par le fait que** chaque taquet comprend au moins une surface latérale (14, 15) servant de butée du déplacement horizontal de l'objet, le taquet étant en saillie.

3. Dispositif selon la revendication 2, **caractérisé par le fait que** la surface latérale est verticale.

4. Dispositif selon la revendication 2 ou 3, **caractérisé par le fait que** chaque taquet comprend trois surfaces latérales de butée.

5. Dispositif selon l'une quelconque des revendications précédentes, **caractérisé par le fait que** chaque taquet comprend une butée de basculement vers le haut.

6. Dispositif selon l'une quelconque des revendications précédentes, **caractérisé par le fait que** chaque taquet comprend un moyen pour le maintenir en saillie en l'absence d'objet.

7. Dispositif selon l'une quelconque des revendications précédentes, **caractérisé par le fait qu'**il comprend un flasque (8) sur lequel sont disposés une pluralité de taquets.

8. Support équipé d'une pluralité de dispositifs selon l'une quelconque des revendications précédentes, disposés en au moins une rangée.

9. Support selon la revendication 8, **caractérisé par le fait que** les dispositifs sont disposés en deux rangées parallèles à une distance l'une de l'autre telle qu'au moins un taquet de chaque dispositif soit en position de blocage.

10. Wagon ferroviaire équipé d'un support selon la revendication 8 ou 9.

## Claims

1. Device for limiting the horizontal displacement of an object resting on a flat support, the said object comprising a lower wall in contact with the support and an edge adjacent and essentially perpendicular to the lower wall, the device comprising object retention means arranged in the support and capable of retracting underneath the object and projecting upwards from the support to form a limiter of horizontal displacement of the object, the said retention means comprising a plurality of dogs (9) able to move between a blocking position in which they project from the support and a position of retraction into the support, the said dogs each being provided with an upper surface (13) designed to come into contact with an object placed on the support and to cause the corresponding dog to retract, the placing of an object on the support causing the corresponding dog to retract, the dogs being provided with means for keeping them in the blocking position if there is no contact with an object, dogs adjacent to retracted dogs forming limiters of horizontal displacement of the object, and each dog being pivoted about a pin (10) connected to the support, the said device being **characterized in that** each dog comprises a counterweight tending to cause the said dog to pivot upwards.

2. Device according to Claim 1, **characterized in that** each dog comprises at least one lateral surface (14, 15) acting as a limiter of horizontal displacement of the object when the dog is in the projecting position.

3. Device according to Claim 2, **characterized in that** the lateral surface is vertical.

4. Device according to Claim 2 or 3, **characterized in that** each dog comprises three lateral limiter surfaces.

5. Device according to any one of the preceding claims, **characterized in that** each dog comprises a limiter of upward tilting.

6. Device according to any one of the preceding claims, **characterized in that** each dog comprises a means for keeping it in the projecting position in the absence of an object.

7. Device according to any one of the preceding claims, **characterized in that** it comprises a side plate (8) on which a plurality of dogs are arranged.

8. Support equipped with a plurality of devices according to any one of the preceding claims, where the said devices are arranged in at least one row.

9. Support according to Claim 8, **characterized in that** the devices are arranged in two parallel rows, the distance between rows being such that at least one dog on each device is in the blocking position.

10. Railway truck equipped with a support according to Claim 8 or 9.

## Patentansprüche

1. Vorrichtung zur Einschränkung der Horizontalbewegung eines auf einer ebenen Auflage ruhenden Gegenstandes, wobei der Gegenstand eine mit der Auflage in Berührung stehende untere Wand und einen daran anschließenden und zu der unteren Wand im Wesentlichen rechtwinkligen Rand aufweist; wobei die Vorrichtung Haltemittel für den auf die Auflage aufgelegten Gegenstand aufweist, die unter dem Gegenstand verschwinden und nach oben zu über die Auflage unter Ausbildung eines Anschlags für die Horizontalbewegung des Gegenstandes vorragen können, wobei die Haltemittel eine Anzahl Knaggen (9) aufweisen, die zwischen einer bezüglich der Auflage vorragenden Blockierstellung und einer in der Auflage versenkten Stellung beweglich, jeweils mit einer oberen Fläche (13) versehen sind, die dazu eingerichtet ist mit einem auf die Auflage aufgesetzten Gegenstand in Berührung zu kommen und das Versenken der entsprechenden Knagge zu bewirken, wobei das Auflegen eines Gegenstandes auf die Auflage das Versenken der entsprechenden Knagge hervorruft, wobei die Knaggen mit Mitteln versehen sind, um sie bei fehlender Berührung mit einem Gegenstand in der Blockierposition zu halten, wobei die den versenken zum Knaggen benachbarten Knaggen Anschläge für die Horizontalbewegung des Gegenstandes bilden, wobei jede Knagge auf einer an der Auflage fest angeordneten Achse (10) gelenkig gelagert ist, **dadurch gekennzeichnet, dass** jede Knagge ein Gegengewicht aufweist, das die Knagge nach oben zu verschwenken will.

2. Vorrichtung nach Anspruch 1, **dadurch gekennzeichnet, dass** jede Knagge wenigstens eine seitliche Fläche (14,15) aufweist, die als Anschlag für die Horizontalbewegung des Gegenstandes bei in der vorragenden Stellung stehender Knagge dient.

3. Vorrichtung nach Anspruch 2, **dadurch gekennzeichnet, dass** die seitliche Fläche vertikal ist.

4. Vorrichtung nach Anspruch 2 oder 3, **dadurch gekennzeichnet, dass** jede Knagge drei seitliche Anschlagflächen aufweist.

5. Vorrichtung nach einem der vorhergehenden Ansprüche, **dadurch gekennzeichnet, dass** jede Knagge einen Anschlag für eine Kippbewegung nach oben zu aufweist.

6. Vorrichtung nach einem der vorhergehenden Ansprüche, **dadurch gekennzeichnet, dass** jede Knagge ein Mittel aufweist, um sie bei abwesendem Gegenstand in der vorragenden Stellung zu halten.

7. Vorrichtung nach einem der vorhergehenden Ansprüche, **dadurch gekennzeichnet, dass** sie einen Flansch (8) aufweist, auf dem mehrere Knaggen angeordnet sind.

8. Auflage die mit einer Anzahl von Vorrichtungen nach einem der vorhergehenden Ansprüche ausgerüstet ist, die in wenigstens einer Reihe angeordnet sind.

9. Auflage nach Anspruch 8, **dadurch gekennzeichnet, dass** die Vorrichtungen in zwei parallelen Reihen in einem gegenseitigen Abstand angeordnet sind, derart dass wenigstens eine Knagge jeder Vorrichtung in der Blockierposition steht.

10. Eisenbahnwaggon, der mit einer Auflage nach dem Anspruch 8 oder 9 ausgebildet ist.
